# EUROPÄISCHE PATENTSCHRIFT

(11) **EP 2 842 716 B1**
(45) Veröffentlichungstag und Bekanntmachung des Hinweises auf die Patenterteilung: **13.07.2016**
(21) Anmeldenummer: 13182151.4
(22) Anmeldetag: 29.08.2013
(51) Int. Cl.: B29C 47/08, B29C 47/40, B29C 47/00, B29C 47/36, B29C 47/60, B29C 47/76, B29C 47/82, B29C 47/84

(54) **Schneckenmaschine und Verfahren zur Aufbereitung von Kunststoffschmelzen**
Worm machine and method for the treatment of plastic melts
Machine à vis sans fin et procédé de préparation de matières plastiques en fusion

(43) Veröffentlichungstag der Anmeldung: 04.03.2015
(73) Patentinhaber: Coperion GmbH, 70469 Stuttgart (DE)
(72) Erfinder: Schlipf, Edgar R., 73061 Weiler (DE); Schleicher, Raimund, 71672 Marbach (DE)
(74) Vertreter: Rau, Schneck & Hübner Patentanwälte Rechtsanwälte PartGmbB

(56) Entgegenhaltungen:
- EP-A1- 0 635 343
- EP-A2- 1 541 870
- WO-A1-99/29486
- DE-A1-102004 051 306
- DE-A1-102007 055 764

## Beschreibung

Die Erfindung betrifft eine Schneckenmaschine zur Aufbereitung von Kunststoffschmelzen gemäß dem Oberbegriff des Anspruchs 1. Ferner betrifft die Erfindung ein Verfahren zur Aufbereitung von Kunststoffschmelzen.

Aus der EP 2 082 862 A1 ist eine Schneckenmaschine bekannt, deren Wellen an einem stromaufwärtigen Ende des Gehäuses mittels Gleitlager fliegend gelagert und mittels einer Stoffbuchspackung abgedichtet sind. Das Gleitlager besteht aus einem Sintermetall, insbesondere aus Sinterbronze. Nachteilig ist, dass die Lagerung der Wellen aufwendig ist und dennoch einem Verschleiß unterliegt, so dass die Lagerung in regelmäßigen Abständen gewartet werden muss.

Aus der EP 0 635 343 A1 ist eine mehrwellige Schneckenmaschine bekannt. Zur verbesserten Kraftübertragung sind die Zahnräder von zwei benachbarten Förderwellen axial zueinander versetzt angeordnet. Zusätzlich sind die Förderwellen mittels Zahnrädern, die ein Hohlzahnrad kämmen, abgestützt.

Die DE 10 2004 051 306 A1 offenbart eine Antriebsvorrichtung für einen Doppelschneckenextruder. Die Ausgangswellen der Antriebsvorrichtung sind durch Gleitlager gelagert, die über Ölleitungen mit Schmiermittel versorgt werden.

Die WO 99/29486 A1 offenbart ein Getriebe für einen Doppelschneckenextruder. Die Leistungsverzweigungsstufe weist Gleitlager auf, bei denen durch Schmierung mit Öl ein hydrodynamischer Schmierfilm aufgebaut wird.

Die EP 1 541 870 A2 offenbart ein eingängiges Förderelement für einen Doppelschneckenextruder.

Die DE 10 2007 055 764 A1 offenbart eine Extruderschnecke mit einem Lagersegment, das innerhalb eines Knetabschnitts oder stromabwärts eines Knetabschnitts eine hydrodynamische Lagerfunktion ausübt.

Der Erfindung liegt die Aufgabe zugrunde, eine Schneckenmaschine zur Aufbereitung von Kunststoffschmelzen zu schaffen, die auf einfache Weise eine Wellenlagerung mit vergleichsweise geringerem Verschleiß ermöglicht.

Diese Aufgabe wird durch eine Schneckenmaschine mit den Merkmalen des Anspruchs 1 gelöst. Das mindestens eine Wellenlager stromaufwärts der Zufuhröffnung ist erfindungsgemäß hydrodynamisch ausgebildet, wodurch auf einfache Weise eine berührungsfreie und damit auch verschleißfreie Lagerung erzielt wird. Insbesondere kann bei der Wellenlagerung auf hochwertige Werkstoffe bzw. Werkstoffpaarungen verzichtet werden, wodurch die Wellenlagerung einfacher und kostengünstiger wird. Die hydrodynamische Ausbildung des mindestens einen Wellenlagers erfolgt mittels der aufzubereitenden Kunststoffschmelze. Hierdurch wird auf einfache Weise die aufzubereitende Kunststoffschmelze gleichzeitig zur Wellenlagerung eingesetzt.

Die Schneckenmaschine gewährleistet eine berührungslose und verschleißfreie Wellenlagerung. Sobald die mindestens eine Welle drehangetrieben wird, bildet sich in dem jeweiligen Lagerspalt, also zwischen der mindestens einen Welle und dem Gehäuse, ein Gleitfilm bzw. Schmierfilm aus. Der Gleitfilm ist aufgrund einer - im Regelfall - symmetrischen Druckverteilung im Wesentlichen symmetrisch bzw. rotationssymmetrisch ausgebildet. Wirken radiale Lasten auf die mindestens eine Welle, verlagert sich diese in radialer Richtung, wodurch sich ein asymmetrischer Gleitfilm und eine asymmetrische Druckverteilung aufbauen, die die radialen Lasten kompensieren. Der Lagerspalt wird mit der aufzubereitenden Kunststoffschmelze beschickt.

Die Schneckenmaschine ist insbesondere als Mehrwellen-Schneckenmaschine, vorzugsweise als Zweiwellen-Schneckenmaschine ausgebildet. Die Behandlungselementwellen der Mehrwellen-Schneckenmaschine bzw. Zweiwellen-Schneckenmaschine sind insbesondere gleichsinnig drehantreibbar und dichtkämmend ausgebildet.

Eine Schneckenmaschine nach Anspruch 2 gewährleistet eine einfache und zuverlässige Wellenlagerung. Die Spaltbreite B gewährleistet, dass der Gleitfilm einerseits eine ausreichende radiale Dicke aufweist, um radiale Lasten kompensieren zu können, und dass die radiale Dicke des Gleitfilms andererseits nicht zu groß ist, um eine stabile Wellenlagerung zu ermöglichen.

Eine Schneckenmaschine nach Anspruch 3 gewährleistet eine einfache und zuverlässige Wellenlagerung. Die Spaltlänge L gewährleistet, dass der Lagerspalt einerseits in axialer Richtung ausreichend lang ist, um die auftretenden radialen Lasten über die Spaltlänge verteilt und in Verbindung mit der Spaltbreite kompensieren zu können, und dass die Spaltlänge andererseits nicht zu lang ist, um einen zu großen Strömungswiderstand zu vermeiden und eine zuverlässige Schmierung zu gewährleisten.

Eine Schneckenmaschine nach Anspruch 4 ermöglicht auf einfache Weise eine hydrodynamische Wellenlagerung. Dadurch, dass der jeweilige Lagerspalt von der aufzubereitenden Kunststoffschmelze durchströmt wird, bildet die Kunststoffschmelze in einfacher Weise gleichzeitig den Gleitfilm bzw. Schmierfilm aus. Vorzugsweise wird die aufzubereitende Kunststoffschmelze in einen Hauptstrom und einen Nebenstrom aufgeteilt, wobei der Lagerspalt von dem Nebenstrom durchströmt wird. Der Lagerspalt ist mit der mindestens einen Gehäusebohrung in Verbindung, so dass entweder die Kunststoffschmelze bzw. der Nebenstrom dem Lagerspalt aus der mindestens einen Gehäusebohrung zuführbar ist und/oder die Kunststoffschmelze bzw. der Nebenstrom nach dem Durchströmen des Lagerspalts in die mindestens eine Gehäusebohrung abführbar ist. Hierdurch wird eine einfache Zuführung und/oder Abführung der Kunststoffschmelze bzw. des Nebenstroms gewährleistet.

Eine Schneckenmaschine nach Anspruch 5 gewährleistet eine einfache Wellenlagerung. Der Nebenstrom der Kunststoffschmelze wird nach dem Durchströmen des Lagerspalts dem Hauptstrom zugeführt, so dass die zu der hydrodynamischen Wellenlagerung eingesetzte Kunststoffschmelze weiterverarbeitet wird. Eine Entsorgung von der zur hydrodynamischen Lagerung verwendeten Kunststoffschmelze entfällt hierdurch. Zudem bleibt die gesamte Kunststoffschmelze im Aufbereitungsprozess erhalten.

Eine Schneckenmaschine nach Anspruch 6 gewährleistet auf einfache Weise die Zuführung der Kunststoffschmelze zu dem jeweiligen Lagerspalt. Die der Schneckenmaschine zugeführte Kunststoffschmelze wird in der mindestens einen Gehäusebohrung in einen Hauptstrom und einen Nebenstrom aufgeteilt. Der Nebenstrom durchströmt entgegen der Förderrichtung des Hauptstroms den jeweiligen Lagerspalt. Hierzu wird die Kunststoffschmelze beispielsweise mit einem entsprechend hohen Schmelzedruck in die mindestens eine Gehäusebohrung zugeführt, so dass der Hauptstrom in üblicher Weise in der Förderrichtung gefördert wird und der Nebenstrom durch den jeweiligen Schmelzekanal gedrückt wird. Darüber hinaus kann beispielsweise in dem Zuführabschnitt ein Beschickungselement angeordnet sein, das den Nebenstrom entgegen der Förderrichtung des Hauptstroms zu dem jeweiligen Lagerspalt fördert. Nach dem Durchströmen des Lagerspalts kann der Nebenstrom wieder dem Hauptstrom zugeführt werden. Hierzu mündet der jeweilige Schmelzekanal wieder in die Zuführöffnung bzw. in die mindestens eine Gehäusebohrung. Der Schmelzekanal kann zur Rückführung des Nebenstroms abschnittsweise in dem Gehäuse und/oder außerhalb des Gehäuses bzw. extern ausgebildet sein.

Eine Schneckenmaschine nach Anspruch 7 gewährleistet eine zuverlässige Wellenlagerung. Das Beschickungselement stellt auf einfache Weise eine Versorgung des zugehörigen Lagerspalts mit der aufzubereitenden Kunststoffschmelze sicher. Die Versorgung ist insbesondere unabhängig von dem Schmelzedruck, mit dem die Kunststoffschmelze zugeführt wird.

Eine Schneckenmaschine nach Anspruch 8 gewährleistet eine einfache hydrodynamische Wellenlagerung. Die Kunststoffschmelze wird vor dem Zuführen in die mindestens eine Gehäusebohrung in einen Hauptstrom und einen Nebenstrom aufgeteilt. Der Hauptstrom wird zur Aufbereitung in die mindestens eine Gehäusebohrung geführt. Der Nebenstrom wird in der Förderrichtung des Hauptstroms durch den jeweiligen Lagerspalt geführt. Vorzugsweise wird der Nebenstrom anschließend in die mindestens eine Gehäusebohrung geführt. Vorzugsweise wird der Nebenstrom aufgrund eines ausreichend hohen Schmelzedrucks durch den jeweiligen Schmelzekanal bzw. jeweiligen den Lagerspalt gepresst.

Eine Schneckenmaschine nach Anspruch 9 gewährleistet ein möglichst verschleißfreies Anfahren der Schneckenmaschine. Mittels der Startpumpe wird vor dem Anfahren der Schneckenmaschine das mindestens eine Wellenlager bzw. der zugehörige Lagerspalt mit einem Gleitmittel vorgefüllt. Das Gleitmittel kann beispielsweise ein Schmierfett und/oder die Kunststoffschmelze sein. Das Anfahren erfolgt insbesondere bei verminderter Last, so dass das Anfahren möglichst verschleißfrei erfolgt. Alternativ oder zusätzlich können für das erstmalige Anfahren der Schneckenmaschine in den mindestens einen Lagerspalt Kunststoff-Formkörper eingelegt werden, wie beispielsweise Kunststoff-Streifen, die beim erstmaligen Anfahren in dem mindestens einen Lagerspalt aufschmelzen und den Verschleiß beim Anfahren minimieren.

Eine Schneckenmaschine nach Anspruch 10 gewährleistet in einfacher Weise eine zuverlässige Wellenlagerung. Durch die Temperierbarkeit des Gehäuses und/oder der mindestens einen Welle können die hydrodynamischen Lagereigenschaften des mindestens einen Wellenlagers je nach Bedarf beeinflusst werden. Erfolgt beispielsweise beim Durchströmen des Lagerspalts eine hohe Wärmeerzeugung aufgrund einer hohen Viskosität der Kunststoffschmelze, so kann das mindestens eine Wellenlager bzw. die Lagerstelle gekühlt werden. Das Gehäuse und/oder die mindestens eine Welle ist im Bereich des mindestens einen Wellenlagers insbesondere kühlbar ausgebildet.

Eine Schneckenmaschine nach Anspruch 11 gewährleistet eine einfache Abdichtung der mindestens einen Welle. Das Dichtelement ist insbesondere als berührungslos arbeitendes Dichtelement und somit wartungsfrei ausgebildet, beispielsweise als Gewindewellen-Dichtelement. Mittels des Gewindewellen-Dichtelements wird die Kunststoffschmelze bzw. der Nebenstrom in Richtung der mindestens einen Gehäusebohrung gefördert und dementsprechend zur Abdichtung ein Staudruck aufgebaut. Die Kunststoffschmelze bzw. der Nebenstrom wird vorzugsweise in den Schmelzekanal und/oder die mindestens eine Gehäusebohrung zurückgefördert.

Der Erfindung liegt ferner die Aufgabe zugrunde, ein Verfahren zur Aufbereitung von Kunststoffschmelzen zu schaffen, das in einfacher Weise eine Wellenlagerung mit vergleichsweise geringerem Verschleiß ermöglicht.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen der erfindungsgemäßen Schneckenmaschine, worauf hiermit verwiesen wird. Das Verfahren kann insbesondere mit den Merkmalen der Ansprüche 2 bis 11 weitergebildet werden.

Ein Verfahren nach Anspruch 13 gewährleistet eine einfache und zuverlässige hydrodynamische Wellenlagerung. Dadurch, dass die Kunststoffschmelze in einen Hauptstrom und in einen Nebenstrom aufgeteilt wird, muss zur hydrodynamischen Lagerung der mindestens einen Welle lediglich der Nebenstrom durch den jeweiligen Lagerspalt des mindestens einen Wellenlagers geführt werden. Der Nebenstrom gewährleistet somit auf einfache Weise eine verschleißfreie Wellenlagerung. Gleichzeitig wird der Durchsatz der Schneckenmaschine nicht beeinträchtigt, da der Hauptstrom nicht den Lagerspalt durchströmen muss. Vorzugsweise wird der Nebenstrom nach dem Durchströmen des Lagerspalts wieder dem Hauptstrom zugeführt, so dass eine Entsorgung von Kunststoffschmelze entfällt und die gesamte Kunststoffschmelze aufbereitet wird.

Ein Verfahren nach Anspruch 14 gewährleistet eine zuverlässige hydrodynamische Wellenlagerung. Der Schmelzedruck stellt sicher, dass die Kunststoffschmelze bzw. der Nebenstrom kontinuierlich, also ohne Unterbrechung, den jeweiligen Lagerspalt durchströmt. Der Schmelzedruck kann beispielsweise mittels einer Schmelzepumpe bereitgestellt werden. Der Schmelzedruck ist vorzugsweise je nach Bedarf bzw. Kunststoffschmelze einstellbar. Der Schmelzedruck gibt den Druck der Kunststoffschmelze abzüglich dem Umgebungsdruck an.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Mehrwellen-Schneckenmaschine gemäß einem ersten Ausführungsbeispiel mit hydrodynamisch gelagerten Wellen,
- Fig. 2: eine teilweise geschnittene Draufsicht auf die Mehrwellen-Schneckenmaschine in Fig. 1,
- Fig. 3: einen Querschnitt durch die Mehrwellen-Schneckenmaschine entlang der Schnittlinie III-III in Fig. 2,
- Fig. 4: eine vergrößerte Darstellung der Mehrwellen-Schneckenmaschine im Bereich der hydrodynamisch gelagerten Wellen,
- Fig. 5: einen Querschnitt durch die Mehrwellen-Schneckenmaschine entlang der Schnittlinie V-V in Fig. 4, und
- Fig. 6: eine vergrößerte und teilweise geschnittene Darstellung einer Mehrwellen-Schneckenmaschine gemäß einem zweiten Ausführungsbeispiel mit hydrodynamisch gelagerten Wellen.

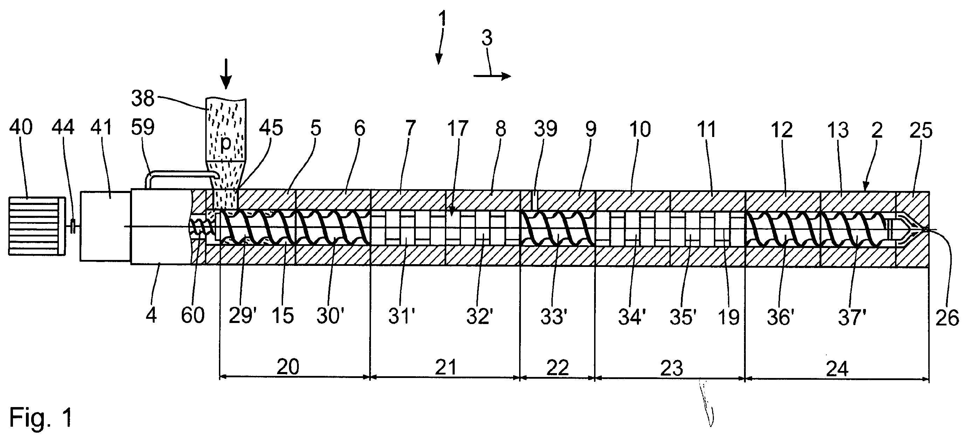

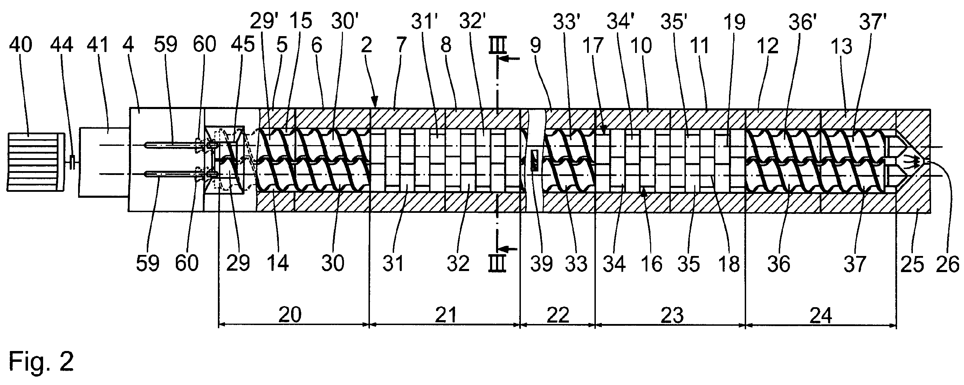

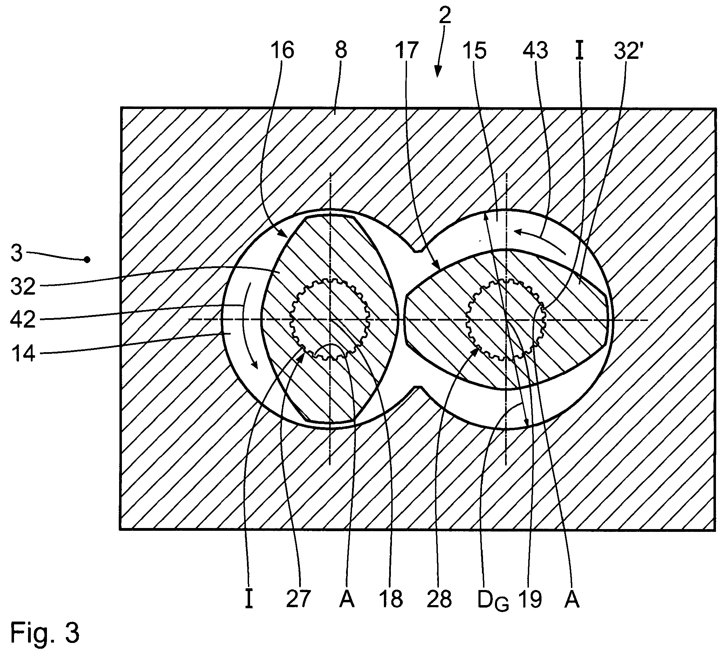

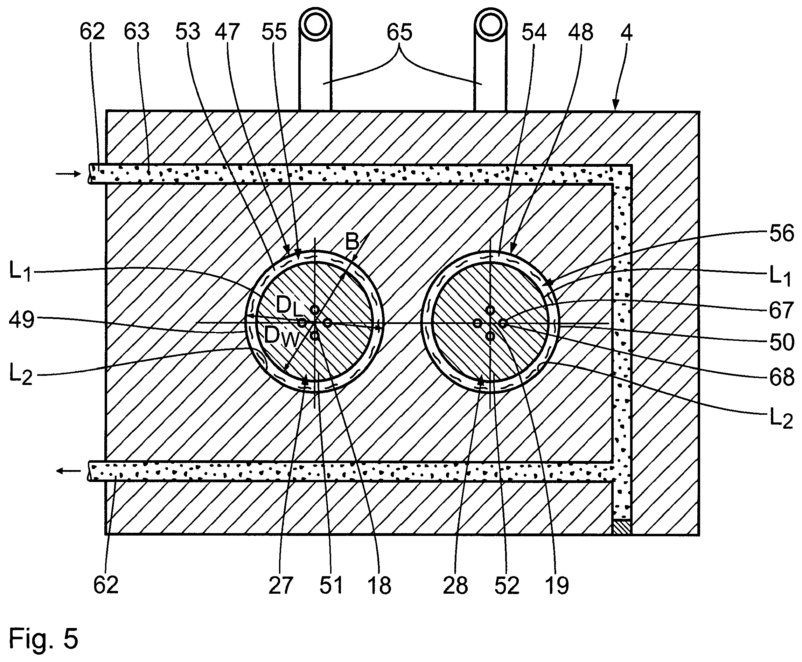

Nachfolgend ist anhand der Fig. 1 bis 5 ein erstes Ausführungsbeispiel der Erfindung beschrieben. Eine Mehrwellen-Schneckenmaschine 1 weist ein Gehäuse 2 aus mehreren, in einer Förderrichtung 3 nacheinander angeordneten und als Gehäuseschüssen bezeichneten Gehäuseabschnitten 4 bis 13 auf. Die Gehäuseabschnitte 4 bis 13 sind über nicht näher dargestellte Flansche miteinander verbunden und bilden das Gehäuse 2 aus.

In den Gehäuseabschnitten 5 bis 13 sind zwei zueinander parallele und einander durchdringende Gehäusebohrungen 14, 15 ausgebildet, die im Querschnitt die Form einer liegenden Acht haben. In den Gehäusebohrungen 14, 15 sind konzentrisch zwei Behandlungselementwellen 16, 17 angeordnet, die um zugehörige Drehachsen 18, 19 drehantreibbar sind.

Die Schneckenmaschine 1 weist in der Förderrichtung 3 nacheinander eine Einzugszone 20, eine erste Aufbereitungszone 21, eine Entgasungszone 22, eine zweite Aufbereitungszone 23 und eine Druckaufbauzone 24 auf. Das Gehäuse 2 ist an dem letzten Gehäuseabschnitt 13 durch eine Adapterplatte 25 abgeschlossen, die eine Austragsöffnung 26 aufweist.

Die Behandlungselementwellen 16, 17 sind durch Wellen 27, 28 mit darauf angeordneten Behandlungselementen 29 bis 37 bzw. 29' bis 37' gebildet. Die auf der ersten Welle 27 angeordneten Behandlungselemente 29 bis 37 und die auf der zweiten Welle 28 angeordneten Behandlungselemente 29' bis 37' entsprechen einander, wobei die Bezugszeichen der auf der zweiten Welle 28 angeordneten Behandlungselemente 29' bis 37' zur Unterscheidung ein "'" aufweisen. In der Einzugszone 20, der Entgasungszone 22 und der Druckaufbauzone 24 sind die Behandlungselemente 29, 29', 30, 30', 33, 33', 36, 36' und 37, 37' als Schneckenelemente ausgebildet, wohingegen die Behandlungselemente 31, 31', 32, 32', 34, 34' und 35, 35' in den Aufbereitungszonen 21 und 23 als Knetelemente ausgebildet sind. Die Behandlungselemente 29 bis 37 bzw. 29' bis 37' sind zur Behandlung bzw. Aufbereitung einer Kunststoffschmelze 38 paarweise dichtkämmend ausgebildet. Zur Entgasung der Kunststoffschmelze 38 weist der Gehäuseabschnitt 9 eine Entgasungsöffnung 39 auf.

Die Behandlungselementwellen 16, 17 sind mittels eines Antriebsmotors 40 und eines zugehörigen Verzweigungsgetriebes 41 gleichsinnig, also in gleichen Drehrichtungen 42, 43 um die Drehachsen 18, 19 drehantreibbar. Zwischen dem Antriebsmotor 40 und dem Verzweigungsgetriebe 41 ist eine Kupplung 44 angeordnet.

Zur drehfesten Anordnung der Behandlungselemente 29 bis 37 bzw. 29' bis 37' sind die Wellen 27, 28 im Bereich der Behandlungselemente 29 bis 37 bzw. 29' bis 37' mit einem Außenprofil A versehen, das mit einem jeweiligen Innenprofil I der Behandlungselemente 29 bis 37 bzw. 29' bis 37' die drehfeste Verbindung erzeugt.

Zur Zuführung der Kunststoffschmelze 38 ist in dem Gehäuseabschnitt 5 eine Zuführöffnung 45 ausgebildet, die in die Gehäusebohrungen 14, 15 mündet. Die Kunststoffschmelze 38 ist beispielsweise mittels einer Schmelzepumpe mit einem einstellbaren Schmelzedruck p durch die Zuführöffnung 45 in die Gehäusebohrungen 14, 15 zuführbar.

Zur Lagerung der Wellen 27, 28 weist die Schneckenmaschine 1 relativ zu der Förderrichtung 3 stromaufwärts im Bereich des Gehäuseabschnitts 4 zwei Wellenlager 47, 48 auf. Die Wellenlager 47, 48 sind hydrodynamisch ausgebildet und werden nachfolgend auch als hydrodynamische Wellenlager 47, 48 bezeichnet.

Zur Ausbildung der hydrodynamischen Wellenlager 47, 48 sind in dem Gehäuseabschnitt 4 zwei Lagerbohrungen 49, 50 ausgebildet. Die Lagerbohrungen 49, 50 erstrecken sich ausgehend von den Gehäusebohrungen 14, 15 konzentrisch zu den Drehachsen 18, 19 durch den Gehäuseabschnitt 4 bis zu dem Verzweigungsgetriebe 41. Die Lagerbohrungen 49, 50 weisen einen Durchmesser D_{L} auf, der kleiner als ein Durchmesser D_{G} der Gehäusebohrungen 14, 15 ist, so dass sich die Lagerbohrungen 49, 50 nicht schneiden.

Die Wellen 27, 28 sind durch die zugehörigen Lagerbohrungen 49, 50 geführt. Zur Ausbildung der hydrodynamischen Wellenlager 47, 48 weisen die Wellen 27, 28 zugehörige Lagerabschnitte 51, 52 auf, die eine erste glatte Lageroberfläche L₁ bilden. Entsprechend weisen die Lagerbohrungen 49, 50 im Bereich der Lagerabschnitte 51, 52 zweite glatte Lageroberflächen L₂ auf. Die Lagerbohrungen 49, 50 und die zugehörigen Lagerabschnitte 51, 52 begrenzen mit ihren Lageroberflächen L₁ und L₂ zugehörige Lagerspalte 53, 54. Die Wellen 27, 28 weisen im Bereich der Lagerabschnitte 51, 52 einen Durchmesser D_{w} auf, der kleiner als der Durchmesser D_{L} ist, so dass die Lagerspalte 53, 54 bei konzentrischer Anordnung der Wellen 27, 28 in den Lagerbohrungen 49, 50 ringförmig ausgebildet sind und über den gesamten Umfang eine radiale Spaltbreite B aufweisen. Für das Verhältnis der Spaltbreite B zu dem Durchmesser D_{w} gilt: 0,0005 ≤ B/D_{w} ≤ 0,02, insbesondere 0,001 ≤ B/D_{w} ≤ 0,01, und insbesondere 0,002 ≤ B/D_{w} ≤ 0,005.

Die Lagerspalte 53, 54 weisen ferner in Richtung der Drehachsen 18, 19 eine Spaltlänge L auf. Für das Verhältnis der Spaltlänge L zu dem Durchmesser D_{w} gilt: 0,25 ≤ L/D_{w} ≤ 6, insbesondere 0,5 ≤ L/D_{w} ≤ 4, und insbesondere 1 ≤ L/D_{w} ≤ 2

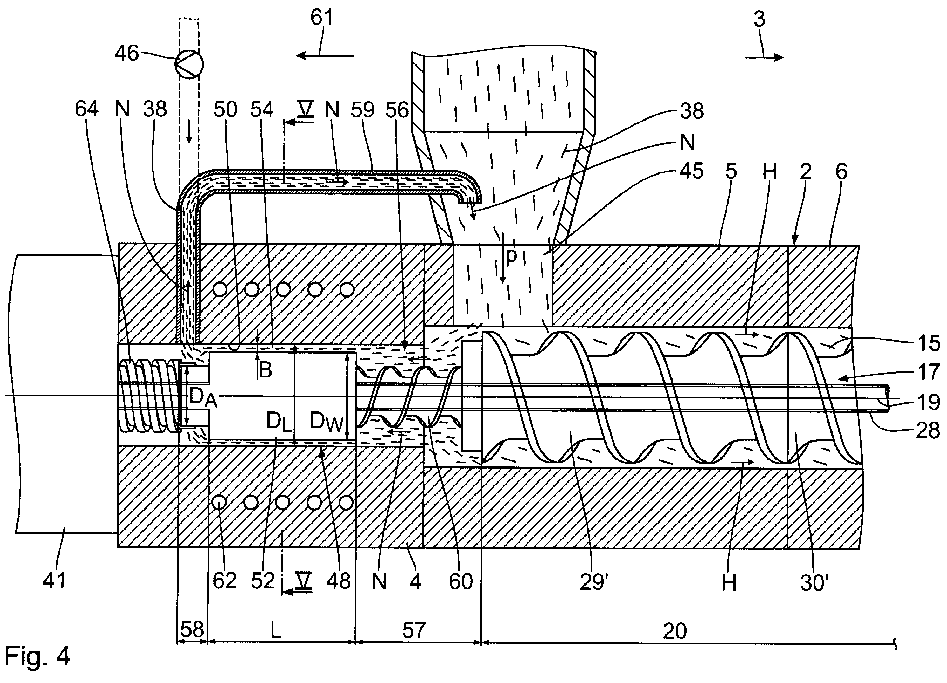

Zur Ausbildung der hydrodynamischen Wellenlager 47, 48 sind die Lagerspalte 53, 54 von der Kunststoffschmelze 38 durchströmbar. Die Schneckenmaschine 1 weist hierzu Schmelzekanäle 55, 56 auf, die als jeweiligen Teilabschnitt den Lagerspalt 53 bzw. 54 umfassen. Fig. 4 zeigt den Schmelzekanal 56 mit dem zugehörigen Lagerspalt 54.

Die Schmelzekanäle 55, 56 sind identisch ausgebildet, so dass nachfolgend lediglich der Schmelzekanal 56 beschrieben ist. Der Schmelzekanal 56 umfasst ausgehend von der Gehäusebohrung 15 einen Zuführabschnitt 57, den Lagerabschnitt 52, einen Abführabschnitt 58 und einen Rückführabschnitt 59. Der Zuführabschnitt 57 erstreckt sich ausgehend von der Zuführöffnung 45 bis zu dem Lagerspalt 54. In dem Zuführabschnitt 57 ist auf der Welle 28 ein als Schneckenelement ausgebildetes Beschickungselement 60 angeordnet. Das Beschickungselement 60 weist eine Beschickungsförderrichtung 61 auf, die der Förderrichtung 3 entgegengesetzt gerichtet ist. Das Beschickungselement 60 ist entsprechend den Behandlungselementen 29' bis 37' auf der Welle 28 drehfest befestigt. Relativ zu der Förderrichtung 3 ist der Zuführabschnitt 57 somit stromabwärts zu dem jeweils zugehörigen Lagerspalt 53, 54 angeordnet.

Der Abführabschnitt 58 ist dem Lagerspalt 54 in der Beschickungsförderrichtung 61 nachgeordnet. In dem Abführabschnitt 58 weist die Welle 28 einen Durchmesser D_{A} auf, der kleiner als der Durclumesser D_{L} ist, so dass in dem Abführabschnitt 58 zwischen der Welle 28 und dem Gehäuseabschnitt 4 in der Lagerbohrung 50 ein vergleichsweise großer Ringraum ausgebildet ist, in den die Kunststoffschmelze 38 aus dem Lagerspalt 54 abführbar ist. Über den Rückführabschnitt 59 ist die Kunststoffschmelze 38 wieder in die Zuführöffnung 45 zurückführbar. Der Rückführabschnitt 59 ist abschnittsweise als Kanal in dem Gehäuseabschnitt 4 und als außerhalb des Gehäuseabschnitts 4 angeordnete Rückführleitung ausgebildet. Entsprechendes gilt für den Schmelzekanal 55 und den zugehörigen Lagerspalt 53.

Der Gehäuseabschnitt 4 ist im Bereich der Wellenlager 47, 48 temperierbar ausgebildet. Hierzu sind in dem Gehäuseabschnitt 4 mehrere Temperierkanäle 62 ausgebildet, in die ein Temperiermittel 63 zuführbar ist. Vorzugsweise dienen die Temperierkanäle 62 bzw. das Temperiermittel 63 zur Kühlung. Weiterhin sind die Wellen 27, 28 im Bereich der Wellenlager 47, 48 temperierbar ausgebildet. Hierzu sind in den Wellen 27, 28 Temperierkanäle 67 ausgebildet, die mit einem Temperiermittel 68 füllbar bzw. von diesem durchströmbar sind. Vorzugsweise dienen die Temperierkanäle 67 bzw. das Temperiermittel 68 zur Kühlung.

In der Förderrichtung 3 stromaufwärts zu den Wellenlagern 47, 48 bzw. in der Beschickungsförderrichtung 61 stromabwärts ist jeweils ein berührungslos arbeitendes Dichtelement 64 angeordnet. Die Dichtelemente 64 sind als Gewindewellen-Dichtelemente ausgebildet. Die Gewindewellen-Dichtelemente 64 sind auf den Wellen 27 bzw. 28 in bereits beschriebener Weise drehfest angeordnet. Die Gewindewellen-Dichtelemente 64 weisen eine Förderrichtung auf, die der Förderrichtung 3 entspricht. Die Gewindewellen-Dichtelemente 64 sind in der Beschickungsförderrichtung 61 stromabwärts zu dem Abführabschnitt 58 angeordnet, so dass die Kunststoffschmelze 38 in den Rückführabschnitt 59 einleitbar ist.

Zum Anfahren der Schneckenmaschine 1 ist eine Startpumpe 46 vorgesehen, die zur Zuführung eines Gleitmittels, insbesondere der Kunststoffschmelze 38 zu den Wellenlagern 47, 48 dient. Die Startpumpe 46 ist mit den Schmelzekanälen 55, 56 verbindbar, so dass vor dem Anfahren der Schneckenmaschine 1 das Gleitmittel bzw. die Kunststoffschmelze 38 in die Lagerspalte 53, 54 förderbar ist. Die Startpumpe 46 ist in Fig. 4 angedeutet.

Nachfolgend ist die Funktionsweise der Schneckenmaschine 1 beschrieben:
Zum Anfahren der Schneckenmaschine wird zunächst die Startpumpe 46 mit den Schmelzekanälen 55, 56 verbunden. Anschließend wird mittels der Startpumpe 46 Kunststoffschmelze 38 in die Lagerspalte 53, 54 gefördert.

Sind die Lagerspalte 53, 54 mit Kunststoffschmelze 38 gefüllt, wird die Startpumpe 46 wieder von den Schmelzekanälen 55, 56 getrennt.

Anschließend wird die Kunststoffschmelze 38 mit einem Schmelzedruck p durch die Zuführöffnung 45 in die Gehäusebohrungen 14, 15 zugeführt und die Schneckenmaschine 1 angefahren. Für den Schmelzedruck p, der den Differenzdruck zwischen dem Druck der Kunststoffschmelze 38 und dem Umgebungsdruck bezeichnet, gilt: 0,01 bar ≤ p ≤ 20 bar, insbesondere 0,1 ≤ p ≤ 10 bar, insbesondere 0,5 bar ≤ p ≤ 5 bar, und insbesondere 1 bar ≤ p ≤ 3 bar.

In den Gehäusebohrungen 14, 15 wird die Kunststoffschmelze 38 in einen Hauptstrom und in einen Nebenstrom aufgeteilt. In Fig. 4 ist der Hauptstrom durch Pfeile angedeutet, die mit H bezeichnet sind, wohingegen der Nebenstrom durch Pfeile angedeutet ist, die mit N bezeichnet sind. Der Hauptstrom H wird in üblicher Weise mittels der Behandlungselemente 29 bis 37 und 29' bis 37' in der Förderrichtung 3 gefördert und die Kunststoffschmelze 38 in üblicher Weise aufbereitet. Demgegenüber wird der Nebenstrom N mittels der Beschickungselemente 60 in der Beschickungsrichtung 61, also entgegengesetzt zu der Förderrichtung 3, zu den hydrodynamischen Wellenlagern 47, 48 gefördert. Die Kunststoffschmelze 38 durchströmt die Lagerspalte 53, 54, wodurch die Wellen 27, 28 im Bereich der Lagerabschnitte 51, 52 hydrodynamisch gelagert werden. Die Kunststoffschmelze 38 bildet in den Lagerspalten 53, 54 einen Gleitfilm bzw. Schmierfilm aus. Aufgrund der Drehung der Wellen 27, 28 ist die Druckverteilung in den Lagerspalten 53, 54 im Wesentlichen symmetrisch, so dass sich der Gleitfilm symmetrisch bzw. rotationssymmetrisch ausbildet. Wirken radiale Lasten auf die Wellen 27, 28, so verlagern sich diese in den Lagerbohrungen 49, 50, wodurch sich eine asymmetrische Druckverteilung und ein asymmetrischer Gleitfilm ausbildet, der die radialen Lasten kompensiert. Die hydrodynamischen Wellenlager 47, 48 arbeiten berührungsfrei und damit auch verschleißfrei.

Die Kunststoffschmelze 38, die die Lagerspalte 53, 54 durchströmt hat, wird über die Abführabschnitte 58 und die Rückführabschnitte 59 wieder durch die Zuführöffnung 45 dem Hauptstrom H zugeführt. Die Gewindewellen-Dichtungen 64 fördern die Kunststoffschmelze 38 in der Förderrichtung 3, so dass diese einen Staudruck erzeugen. Der Staudruck führt dazu, dass die Kunststoffschmelze 38 einerseits nicht zu dem Verzweigungsgetriebe 41 gelangt und andererseits in die Rückführabschnitte 59 geleitet wird.

Zur Temperierung der Wellenlager 47, 48 wird durch die Temperierkanäle 62 ein Temperiermittel 63 geleitet. Die Temperierung ist vorzugsweise eine Kühlung. Eine Kühlung ist insbesondere bei viskosen Kunststoffschmelzen 38 erforderlich, die bei Durchströmen der Lagerspalte 53, 54 Wärme erzeugen. Zusätzlich oder alternativ wird durch die Temperierkanäle 67 ein Temperiermittel 68 geleitet.

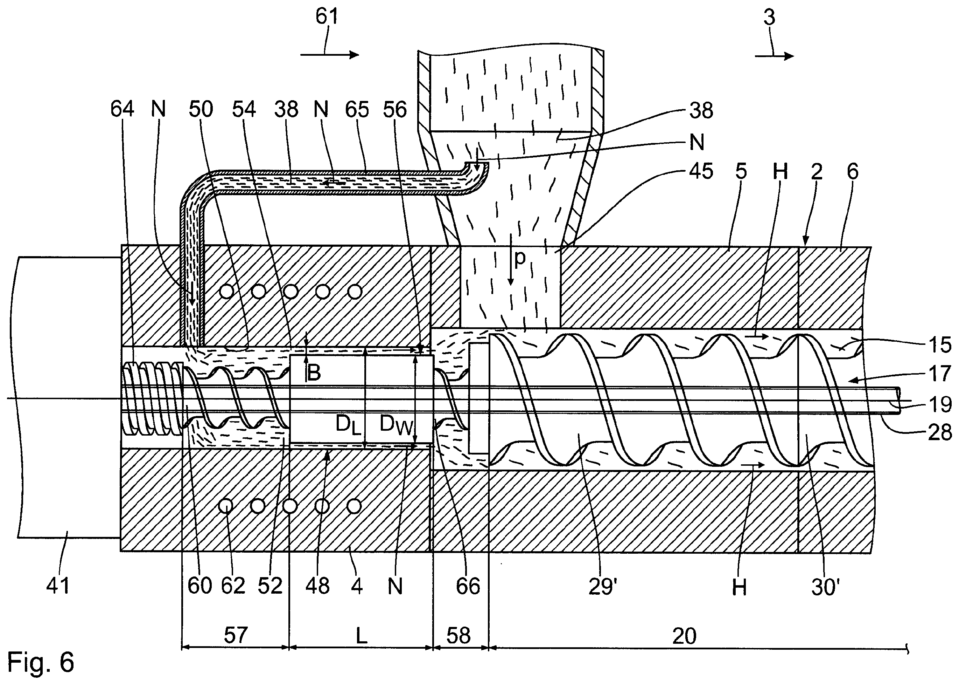

Nachfolgend ist anhand von Fig. 6 ein zweites Ausführungsbeispiel der Erfindung beschrieben. Im Unterschied zu dem ersten Ausführungsbeispiel ist die Beschickungsförderrichtung 61 der Beschickungselemente 60 gleichgerichtet zu der Förderrichtung 3. Der Zuführabschnitt 57 wird durch einen jeweiligen Zuführkanal 65 gebildet, der zwischen dem Gewindewellen-Dichtelement 64 und dem Wellenlager 48 in die Lagerbohrung 50 mündet. Zwischen der Gewindewellen-Dichtung 64 und dem Wellenlager 48 ist das Beschickungselement 60 auf der Welle 28 angeordnet, das die in die Lagerbohrung 50 eintretende Kunststoffschmelze 38 in der Beschickungsrichtung 61 zu dem Wellenlager 48 fördert. Der Abführabschnitt 58 ist in der Förderrichtung 3 stromabwärts zu dem Wellenlager 48 angeordnet. In dem Abführabschnitt 58 ist ein Förderelement 66 auf der Welle 28 angeordnet, das die Kunststoffschmelze 38, die den Lagerspalt 54 durchströmt hat, in die Gehäusebohrung 15 fördert und den Nebenstrom N in den Hauptstrom H zurückführt. Der Abführabschnitt 58 bildet somit gleichzeitig den Rückführabschnitt aus.

Die Kunststoffschmelze 38 wird mit einem Schmelzedruck p bereitgestellt und in einen Hauptstrom H und einen Nebenstrom N aufgeteilt. Der Nebenstrom N wird durch die Zuführkanäle 65 zu den Beschickungselementen 60 gedrückt, wo diese den Nebenstrom N zu den Wellenlagern 47, 48 fördern. Nach dem Durchströmen der Lagerspalte 53, 54 wird der Nebenstrom N mittels der Förderelemente 66 in den Gehäusebohrungen 14, 15 dem Hauptstrom H zugeführt. Der Hauptstrom H wird in üblicher Weise durch die Zuführöffnung 45 in die Gehäusebohrungen 14, 15 geführt und mittels der Behandlungselemente 29 bis 37 bzw. 29' bis 37' in der Schneckenmaschine 1 aufbereitet und in der Förderrichtung 3 gefördert. Hinsichtlich des weiteren Aufbaus der Schneckenmaschine sowie der weiteren Funktionsweise wird auf das erste Ausführungsbeispiel verwiesen.

## Patentansprüche

1. Schneckenmaschine zur Aufbereitung von Kunststoffschmelzen, mit
- einem Gehäuse (2),
- mindestens einer in dem Gehäuse (2) ausgebildeten Gehäusebohrung (14, 15),
- einer in die mindestens eine Gehäusebohrung (14, 15) mündenden Zuführöffnung (45) zur Zuführung einer Kunststoffschmelze (38),
- mindestens einer Behandlungselementwelle (16, 17),
-- die in der zugehörigen Gehäusebohrung (14, 15) angeordnet und um eine zugehörige Drehachse (18, 19) drehantreibbar ist, und
-- die zur Behandlung der Kunststoffschmelze (38) mehrere Behandlungselemente (29 bis 37, 29' bis 37') aufweist, die in einer Förderrichtung (3) der Kunststoffsclumelze (38) nacheinander auf mindestens einer zugehörigen Welle (27, 28) drehfest angeordnet sind,
- mindestens einem relativ zu der Förderrichtung (3) stromaufwärts der Zuführöffnung (45) angeordneten Wellenlager (47, 48) zur Lagerung der mindestens einen Welle (27, 28) in dem Gehäuse (2),
**dadurch gekennzeichnet,**
**dass** das mindestens eine Wellenlager (47, 48) einen Lagerspalt (53, 54) umfasst, der ringförmig ausgebildet ist, und
**dass** das mindestens eine Wellenlager (47, 48) mittels der aufzubereitenden Kunststoffschmelze (38) hydrodynamisch ausgebildet ist.

2. Schneckenmaschine nach Anspruch 1, **dadurch gekennzeichnet, dass** der Lagerspalt (53, 54) radial zu der Drehachse (18, 19) eine Spaltbreite B hat, wobei für ein Verhältnis der Spaltbreite B zu einem Durchmesser D_{w} der mindestens einen Welle (27, 28) im Bereich des mindestens einen Wellenlagers (47, 48) gilt: 0,0005 ≤ B/D_{w} ≤ 0,02, insbesondere 0,001 ≤ B/D_{w} ≤ 0,01, und insbesondere 0,002 ≤ B/D_{w} ≤ 0,005.

3. Schneckenmaschine nach Anspruch 1 oder 2, **dadurch gekennzeichnet,**
**dass** der Lagerspalt (53, 54) in Richtung der Drehachse (18, 19) eine Spaltlänge L hat, wobei für ein Verhältnis der Spaltlänge L zu einem Durchmesser D_{w} der mindestens einen Welle (27, 28) im Bereich des mindestens einen Wellenlagers (47, 48) gilt: 0,25 ≤ L/D_{w} ≤ 6, insbesondere 0,5 ≤ L/D_{w} ≤ 4, und insbesondere 1 ≤ L/D_{w} ≤ 2.

4. Schneckenmaschine nach einem der Ansprüche 1 bis 3, **dadurch gekennzeichnet,**
**dass** der Lagerspalt (53, 54) zur Ausbildung einer hydrodynamischen Lagerung von der Kunststoffschmelze (38) durchströmbar ist und mit der mindestens einen Gehäusebohrung (14, 15) in Verbindung ist.

5. Schneckenmaschine nach einem der Ansprüche 1 bis 4, **dadurch gekennzeichnet,**
**dass** der Lagerspalt (53, 54) einen Teilabschnitt eines Schmelzkanals (55, 56) bildet, und
**dass** durch den Schmelzekanal (55, 56) ein Nebenstrom (N) der Kunststoffschmelze (38) in einen Hauptstrom (H) der Kunststoffschmelze (38) zuführbar ist.

6. Schneckenmaschine nach einem der Ansprüche 1 bis 5, **dadurch gekennzeichnet,**
**dass** der Lagerspalt (53, 54) einen Teilabschnitt eines Schmelzkanals (55, 56) für einen Nebenstrom (N) der Kunststoffschmelze (38) bildet, und
**dass** ein Zuführabschnitt (57) des Schmelzekanals (55, 56) relativ zu der Förderrichtung (3) eines Hauptstroms (H) der Kunststoffschmelze (38) stromabwärts des Lagerspalts (53, 54) angeordnet ist.

7. Schneckenmaschine nach Anspruch 6, **dadurch gekennzeichnet, dass** in dem Zuführabschnitt (57) ein Beschickungselement (59) angeordnet ist, das zur Ausbildung des Nebenstroms (N) eine entgegengesetzt zu der Förderrichtung (3) verlaufende Beschickungsförderrichtung (61) aufweist.

8. Schneckenmaschine nach einem der Ansprüche 1 bis 6, **dadurch gekennzeichnet,**
**dass** der Lagerspalt (53, 54) einen Teilabschnitt eines Schmelzkanals (55, 56) für einen Nebenstrom (N) der Kunststoffschmelze (38) bildet, und
**dass** ein Zuführabschnitt (57) des Schmelzekanals (55, 56) relativ zu der Förderrichtung (3) eines Hauptstroms (H) der Kunststoffschmelze (38) stromaufwärts des Lagerspalts (53, 54) angeordnet ist.

9. Schneckenmaschine nach einem der Ansprüche 1 bis 8, **gekennzeichnet**
**durch** eine Startpumpe (46) zur Zuführung eines Gleitmittels, insbesondere der Kunststoffschmelze (38), in das mindestens eine Wellenlager (47, 48).

10. Schneckenmaschine nach einem der Ansprüche 1 bis 9, **dadurch gekennzeichnet,**
**dass** das Gehäuse (2) und/oder die mindestens eine Welle (27, 28) im Bereich des mindestens einen Wellenlagers (47, 48) temperierbar ausgebildet ist.

11. Schneckenmaschine nach einem der Ansprüche 1 bis 10, **dadurch gekennzeichnet,**
**dass** relativ zu der Förderrichtung (3) stromaufwärts zu dem mindestens einen Wellenlager (47, 48) ein Dichtelement (64) angeordnet ist, das insbesondere als Gewindewellen-Dichtelement (64) ausgebildet ist.

12. Verfahren zur Aufbereitung von Kunststoffschmelzen, umfassend folgende Schritte:
- Bereitstellen einer Schneckenmaschine (1) mit
-- einem Gehäuse (2),
-- mindestens einer in dem Gehäuse (2) ausgebildeten Gehäusebohrung (14, 15),
-- einer in die mindestens eine Gehäusebohrung (14, 15) mündenden Zuführöffnung (45) zur Zuführung einer Kunststoffschmelze (38),
-- mindestens einer Behandlungselementwelle (16, 17),
--- die in der zugehörigen Gehäusebohrung (14, 15) angeordnet und um eine zugehörige Drehachse (18, 19) drehantreibbar ist, und
--- die zur Behandlung der Kunststoffschmelze (38) mehrere Behandlungselemente (29 bis 37, 29' bis 37') aufweist, die in einer Förderrichtung (3) der Kunststoffschmelze (38) nacheinander auf mindestens einer zugehörigen Welle (27, 28) drehfest angeordnet sind,
- Bereitstellen einer Kunststoffschmelze (38),
- Zuführen der Kunststoffschmelze (38) durch die Zuführöffnung (45) in die mindestens eine Gehäusebohrung (14, 15),
- Aufbereiten der Kunststoffschmelze (38) mittels der mindestens einen Behandlungselementwelle (16, 17),
-- **dadurch gekennzeichnet, dass** die mindestens eine Welle (27, 28) während des Aufbereitens mittels mindestens eines relativ zu der Förderrichtung (3) stromaufwärts der Zuführöffnung (45) angeordneten Wellenlagers (47, 48) hydrodynamisch in dem Gehäuse (2) gelagert ist,
-- **dadurch gekennzeichnet, dass** mindestens eine Wellenlager (47, 48) einen Lagerspalt (53, 54) umfasst, der ringförmig ausgebildet ist, und
-- **dadurch gekennzeichnet, dass** mindestens eine Wellenlager (47, 48) mittels der aufzubereitenden Kunststoffschmelze (38) hydrodynamisch ausgebildet ist.

13. Verfahren nach Anspruch 12, **dadurch gekennzeichnet,**
**dass** die Kunststoffschmelze (38) in einen Nebenstrom (N) und einen Hauptstrom (H) aufgeteilt wird,
**dass** der Nebenstrom (N) den Lagerspalt (53, 54) des mindestens einen Wellenlagers (47, 48) durchströmt, und
**dass** insbesondere der Nebenstrom (N) nach dem Durchströmen des Lagerspalts (53, 54) dem Hauptstrom (H) zugeführt wird.

14. Verfahren nach Anspruch 12 oder 13 , **dadurch gekennzeichnet, dass** die Kunststoffschmelze (38) mit einem Schmelzedruck p bereitgestellt wird, wobei gilt: 0,01 bar ≤ p ≤ 20 bar, insbesondere 0,1 ≤ p ≤ 10 bar, insbesondere 0,5 bar ≤ p ≤ 5 bar, und insbesondere 1 bar ≤ p ≤ 3 bar.

## Claims

1. Screw machine for the processing of plastic melts, comprising
- a housing (2),
- at least one housing bore (14, 15) formed in the housing (2),
- a feed opening (45) leading into the at least one housing bore (14, 15) for feeding a plastic melt (38),
- at least one treatment element shaft (16, 17) which
-- is arranged in the associated housing bore (14, 15) and is drivable for rotation about an associated axis of rotation (18, 19), and
-- has, for the treatment of the plastic melt (38), a plurality of treatment elements (29 to 37, 29' to 37') which, seen in a direction of conveyance (3) of the plastic melt (38), are non-rotationally arranged one behind the other on at least one associated shaft (27, 28),
- at least one shaft bearing (47, 48) arranged upstream of the feed opening (45) in relation to the direction of conveyance (3) for mounting the at least one shaft (27, 28) in the housing (2), **characterized in**
**that** the at least one shaft bearing (47, 48) comprises a bearing gap (53, 54) configured in the shape of a ring, and
**that** the at least one shaft bearing (47, 48) is configured hydrodynamically by means of the plastic melt (38) to be processed.

2. Screw machine according to claim 1, **characterized in that** the bearing gap (53, 54) has a gap width B in a direction radial to the axis of rotation (18, 19), wherein a ratio of the gap width B to a diameter D_{W} of the at least one shaft (27, 28) in the region of the at least one shaft bearing (47, 48) is such that 0.0005 ≤ B/D_{W} ≤ 0.02, in particular 0.001 ≤ B/D_{W} ≤ 0.01, and in particular 0.002 ≤ B/D_{W} ≤ 0.005.

3. Screw machine according to claim 1 or 2, **characterized in that** the bearing gap (53, 54) has a gap length L in the direction of the axis of rotation (18, 19), wherein a ratio of the gap length L to a diameter Dw of the at least one shaft (27, 28) in the region of the at least one shaft bearing (47, 48) is such that 0.25 ≤ L/D_{W} ≤ 6, in particular 0.5 ≤ L/D_{W} ≤ 4, and in particular 1 ≤ L/D_{W} ≤ 2.

4. Screw machine according to one of claims 1 to 3, **characterized in that** the bearing gap (53, 54) is adapted for the flow of the plastic melt (38) for the formation of a hydrodynamic bearing, and is in communication with the at least one housing bore (14, 15).

5. Screw machine according to one of claims 1 to 4, **characterized in that** the bearing gap (53, 54) forms a section of a melt channel (55, 56), and
**that,** via said melt channel (55, 56), a partial flow (N) of the plastic melt (38) is feedable into a main flow (H) of the plastic melt (38).

6. Screw machine according to one of claims 1 to 5, **characterized in that** the bearing gap (53, 54) forms a section of a melt channel (55, 56) for a partial flow (N) of the plastic melt (48), and
**that** a feed section (57) of the melt channel (55, 56) is arranged downstream of the bearing gap (53, 54) in relation to the direction of conveyance (3) of a main flow (H) of the plastic melt (38).

7. Screw machine according to claim 6, **characterized in that** in the feed section (57), a loading element (59) is arranged, which in order to form the partial flow (N) has a loading direction of conveyance (61) opposite to the direction of conveyance (3).

8. Screw machine according to one of claims 1 to 6, **characterized in that** the bearing gap (53, 54) forms a section of a melt channel (55, 56) for a partial flow (N) of the plastic melt (38), and
**that** a feed section (57) of the melt channel (55, 56) is arranged upstream of the bearing gap (53, 54) in relation to the direction of conveyance (3) of a main flow (H) of the plastic melt (38).

9. Screw machine according to one of claims 1 to 8, **characterized by** a start pump (46) for feeding a lubricant, in particular the plastic melt (38) into the at least one shaft bearing (47, 48).

10. Screw machine according to one of claims 1 to 9, **characterized in that** the housing (2) and/or the at least one shaft (27, 28) are configured in such a way as to be temperable in the region of the at least one shaft bearing (47, 48).

11. Screw machine according to one of claims 1 to 10, **characterized in that** in relation to the direction of conveyance (3), a sealing element (64) is arranged upstream of the at least one shaft bearing (47, 48), the sealing element (64) in particular being configured as a thread shaft sealing element (64).

12. Method for the processing of plastic melts, comprising the following steps:
- providing a screw machine (1) comprising
-- a housing (2),
-- at least one housing bore (14, 15) formed in the housing (2),
-- a feed opening (45) leading into the at least one housing bore (14, 15) for feeding a plastic melt (38),
-- at least one treatment element shaft (16, 17) which
--- is arranged in the associated housing bore (14, 15) and is drivable for rotation about an associated axis of rotation (18, 19), and
--- has, for the treatment of the plastic melt (38), a plurality of treatment elements (29 to 37, 29' to 37') which, seen in a direction of conveyance (3) of the plastic melt (38), are non-rotationally arranged one behind the other on at least one associated shaft (27, 28),
- providing a plastic melt (38),
- feeding the plastic melt (38) into the at least one housing bore (14, 15) via the feed opening (45),
- processing the plastic melt (38) by means of the at least one treatment element shaft (16, 17), **characterized in**
-- **that** during the processing the at least one shaft (27, 28) is mounted hydrodynamically in the housing (2) by means of at last one shaft bearing (47, 48) arranged upstream of the feed opening (45) in relation to the direction of conveyance (3),
-- **that** the at least one shaft bearing (47, 48) comprises a bearing gap (53, 54) configured in the shape of a ring, and
-- **that** the at least one shaft bearing (47, 48) is configured hydrodynamically by means of the plastic melt (38) to be processed.

13. Method according to claim 12, **characterized in that** the plastic melt (38) is divided into a partial flow (N) and a main flow (H),
**that** the partial flow (N) flows through the bearing gap (53, 54) of the at least one shaft bearing (47, 48), and
**that** after flowing through the bearing gap (53, 54), the partial flow (N) is in particular fed into the main flow (H).

14. Method according to claim 12 or 13, **characterized in that** the plastic melt (38) is provided at a melt pressure p, said pressure p being such that 0.01 bar ≤ p ≤ 20 bar, in particular 0.1 ≤ p ≤ 10 bar, in particular 0.5 ≤ p ≤ 5 bar, and in particular 1 bar ≤ p ≤ 3 bar.

## Revendications

1. Machine à vis sans fin pour la préparation de plastiques en fusion, comprenant
- un carter (2),
- au moins un alésage (14, 15) de carter ménagé dans le carter (2),
- une ouverture d'alimentation (45) débouchant dans ledit au moins un alésage (14, 15) de carter pour l'alimentation en plastique en fusion (38),
- au moins un arbre (16, 17) à éléments de traitement,
-- disposé dans l'alésage (14, 15) de carter correspondant et entraînable en rotation autour d'un axe de rotation (18, 19) correspondant, et
-- présentant plusieurs éléments de traitement (29 à 37, 29' à 37') pour le traitement du plastique en fusion (38), lesquels sont disposés solidairement en rotation sur au moins un arbre (27, 28) correspondant, successivement dans une direction de transport (3) du plastique en fusion (38),
- au moins un palier (47, 48) d'arbre disposé en amont de l'ouverture d'alimentation (45) dans la direction de transport (3), pour le montage dudit au moins un arbre (27, 28) dans le carter (2),
**caractérisée**
**en ce que** ledit au moins un palier (47, 48) d'arbre comporte une fente (53, 54) de palier réalisée avec une forme annulaire, et
**en ce que** ledit au moins un palier (47, 48) d'arbre est réalisé de manière hydrodynamique au moyen du plastique en fusion (38) à préparer.

2. Machine à vis sans fin selon la revendication 1, **caractérisée**
**en ce que** la fente (53, 54) de palier a une largeur de fente B radialement à l'axe de rotation (18, 19), la formule suivante exprimant un rapport entre la largeur de fente B et un diamètre D_{W} dudit au moins un arbre (27, 28) au niveau dudit au moins un palier (47, 48) d'arbre : 0,0005 ≤ B/D_{W} ≤ 0,02, en particulier 0,001 ≤ B/D_{W} ≤ 0,01, et en particulier 0,002 ≤ B/D_{W} ≤ 0,005.

3. Machine à vis sans fin selon la revendication 1 ou 2, **caractérisée**
**en ce que** la fente (53, 54) de palier a une longueur de fente L dans la direction de l'axe de rotation (18, 19), la formule suivante exprimant un rapport entre la longueur de fente L et un diamètre D_{W} dudit au moins un arbre (27, 28) au niveau dudit au moins un palier (47, 48) d'arbre : 0,25 ≤ L/D_{w} ≤ 6, en particulier 0,5 ≤ L/D_{W} ≤ 4, et en particulier 1 ≤ L/D_{W} ≤ 2.

4. Machine à vis sans fin selon l'une des revendications 1 à 3, **caractérisée**
**en ce que** la fente (53, 54) de palier peut être traversée par le plastique en fusion (38) pour la réalisation d'un palier hydrodynamique et est reliée audit au moins un alésage (14, 15) de carter.

5. Machine à vis sans fin selon l'une des revendications 1 à 4, **caractérisée**
**en ce que** la fente (53, 54) de palier constitue un tronçon partiel d'un canal de fonte (55, 56), et
**en ce qu'**un écoulement secondaire (N) du plastique en fusion (38) peut être conduit par le canal de fonte (55, 56) vers un écoulement principal (H) du plastique en fusion (38).

6. Machine à vis sans fin selon l'une des revendications 1 à 5, **caractérisée**
**en ce que** la fente (53, 54) de palier constitue un tronçon partiel d'un canal de fonte (55, 56) pour un écoulement secondaire (N) du plastique en fusion (38), et
**en ce qu'**un tronçon d'alimentation (57) du canal de fonte (55, 56) est disposé en aval de la fente (53, 54) de palier dans la direction de transport (3) d'un écoulement principal (H) du plastique en fusion (38).

7. Machine à vis sans fin selon la revendication 6, **caractérisée**
**en ce qu'**un élément de chargement (59) est disposé dans le tronçon d'alimentation (57), lequel présente une direction de transport de chargement (61) opposée à la direction de transport (3) pour la formation de l'écoulement secondaire (N).

8. Machine à vis sans fin selon l'une des revendications 1 à 6, **caractérisée**
**en ce que** la fente (53, 54) de palier constitue un tronçon partiel d'un canal de fonte (55, 56) pour un écoulement secondaire (N) du plastique en fusion (38), et
**en ce qu'**un tronçon d'alimentation (57) du canal de fonte (55, 56) est disposé en amont de la fente (53, 54) de palier dans la direction de transport (3) d'un écoulement principal (H) du plastique en fusion (38).

9. Machine à vis sans fin selon l'une des revendications 1 à 8, **caractérisée**
**par** une pompe de démarrage (46) pour l'alimentation en lubrifiant, en particulier de plastique en fusion (38), dudit au moins un palier (47, 48) d'arbre.

10. Machine à vis sans fin selon l'une des revendications 1 à 9, **caractérisée**
**en ce que** le carter (2) et/ou ledit au moins un arbre (27, 28) sont réalisés de manière à être thermorégulables dans la zone dudit au moins un palier (47, 48) d'arbre.

11. Machine à vis sans fin selon l'une des revendications 1 à 10, **caractérisée**
**en ce qu'**un élément d'étanchéité (64) est disposé en amont dudit au moins un palier (47, 48) d'arbre dans la direction de transport (3), lequel est en particulier réalisé comme élément d'étanchéité (64) de vis sans fin.

12. Procédé de préparation de plastiques en fusion, comprenant les étapes suivante :
- préparation d'une machine à vis sans fin (1) comprenant
-- un carter (2),
-- au moins un alésage (14, 15) de carter ménagé dans le carter (2),
-- une ouverture d'alimentation (45) débouchant dans ledit au moins un alésage (14, 15) de carter pour l'alimentation d'un plastique en fusion (38),
-- au moins un arbre (16, 17) à éléments de traitement,
--- disposé dans l'alésage (14, 15) de carter correspondant et entraînable en rotation autour d'un axe de rotation (18, 19) correspondant, et
--- présentant plusieurs éléments de traitement (29 à 37, 29' à 37') pour le traitement du plastique en fusion (38), lesquels sont disposés solidairement en rotation sur au moins un arbre (27, 28) correspondant, successivement dans une direction de transport (3) du plastique en fusion (38),
- préparation d'un plastique en fusion (38),
- alimentation du plastique en fusion (38) par l'ouverture d'alimentation (45) dans ledit au moins un alésage (14, 15) de carter,
- préparation du plastique en fusion (38) au moyen dudit au moins un arbre (16, 17) à éléments de traitement, caractérisé
-- en ce que ledit au moins un arbre (27, 28) est pendant la préparation monté de manière hydrodynamique dans le carter (2) au moyen d'au moins un palier (47, 48) d'arbre disposé en amont de l'ouverture d'alimentation (45) dans la direction de transport (3),
-- en ce que ledit au moins un palier (47, 48) d'arbre comporte une fente (53, 54) de palier réalisée avec une forme annulaire, et
-- en ce que ledit au moins un palier (47, 48) d'arbre est réalisé de manière hydrodynamique au moyen du plastique en fusion (38) à préparer.

13. Procédé selon la revendication 12, **caractérisé**
**en ce que** le plastique en fusion (38) est divisé en un écoulement secondaire (N) et un écoulement principal (H),
**en ce que** l'écoulement secondaire (N) traverse la fente (53, 54) de palier dudit au moins un palier (47, 48) d'arbre, et
**en ce qu'**en particulier l'écoulement secondaire (N) est conduit vers l'écoulement principal (H) après la traversée de la fente (53, 54) de palier.

14. Procédé selon la revendication 12 ou 13, **caractérisé en ce que** le plastique en fusion (38) est mis à disposition avec une pression de fonte p, la formule suivante s'appliquant : 0,01 bar ≤ p ≤ 20 bar, en particulier 0,1 ≤ p ≤ 10 bar, en particulier 0,5 bar ≤ p ≤ 5 bar, et en particulier 1 bar ≤ p ≤ 3 bar.
